# EUROPEAN PATENT SPECIFICATION

(11) **EP 2 938 540 B1**
(45) Date of publication and mention of the grant of the patent: **16.11.2022**
(21) Application number: 13826970.9
(22) Date of filing: 20.12.2013
(51) Int. Cl.: B64D 15/12, B64D 29/00, B64D 33/02, F02C 7/045, F02C 7/047

(54) **NACELLE FOR AIRCRAFT, PROVIDED WITH A BUILT-IN SYSTEM FOR ANTI-ICING PROTECTION AND ACOUSTIC ABSORPTION**
GONDEL FÜR FLUGZEUG MIT EINEM EINGEBAUTEN SYSTEM ZUR VERHINDERUNG VON EISBILDUNG UND SCHALLDÄMPFUNG
NACELLE POUR AVION, MUNIE D'UN SYSTÈME INCORPORÉ DE PROTECTION ANTIGIVRE ET D'ABSORPTION ACOUSTIQUE

(30) Priority: 27.12.2012 IT TO20121152
(43) Date of publication of application: 04.11.2015
(73) Proprietor: LEONARDO S.P.A., 00195 Roma (IT)
(72) Inventor: COPIELLO, Diego, 1348 Louvain-La-Neuve (BE)
(74) Representative: Vitillo, Giuseppe
(86) International application number: PCT/IB2013/061177
(87) International publication number: WO 2014/102682

(56) References cited:
- EP-A1- 1 925 551
- EP-A2- 0 376 371
- EP-A2- 1 845 018
- WO-A2-2008/059168
- FR-A1- 2 935 356
- US-A1- 2008 179 448
- US-B1- 6 439 340
- US-B2- 7 291 815

## Description

### Technical field

The present invention is relative to a nacelle for an aircraft, which is provided with a built-in system for anti-icing protection and acoustic absorption.

### Technological background

In the aeronautical field nacelles are known, namely substantially annular casings that have an aerodynamic profile and are adapted to contain, on the inside, an engine assembly of an aircraft.

On the one hand, the engine assemblies used in the aeronautical field are generally made up of several components and parts, which all contribute in a significant manner to the noise generated, both in terms of levels and in terms of frequencies to be attenuated. Therefore, nacelles are typically provided with elements for acoustic absorption (also called "acoustic panels"), which are suited to be mounted on aeronautical components and are manufactured so as to attenuate the noise that is typically generated during the operation of the aircraft.

On the other hand, when the nacelle is being used, ice tends to build up, in particular in correspondence to the so-called lip, mainly due to the presence of low-temperature flows of air. This situation can cause many harmful drawbacks; for example ice formations can, first of all, jeopardize the aerodynamics of the nacelle - hence, of the aircraft itself - and, furthermore, they can detach themselves during the flight, thus hitting the components of the engine assembly housed inside the nacelle and jeopardizing the safety of the flight. For this reason, nacelles are provided with anti-icing devices, which are suited to generate heat in the nacelle, so as to counter the formation of ice on its surface.

Traditionally, in the aeronautical field, anti-icing devices are used, which substantially work in a pneumatic manner by conveying the flow of hot air generated by the engine, which tends to flow out of the nacelle, towards the above-mentioned lip. To this regard, ducts of the so-called "D-duct" type are obtained in an annular hollow space defined between a double wall of the cowling, in correspondence to the lip of the nacelle. For example, in this technical field it is widely known to introduce into the hollow space defined by the above-mentioned duct a tubular element, which annularly develops therein and is laterally provided with a plurality of nozzles, which deliver hot air, which, in turn, is drawn through proper passages obtained in the nacelle. The type of tube described above is known, in the technical field, as "Piccolo tube". The hot air delivered prevents ice from building up, since it causes the water hitting the lip of the nacelle to completely evaporate.

The US patent no. US 7,291,815 is relative to a built-in system, which, in a nacelle of an aircraft, is adapted to simultaneously fulfill the anti-icing function and the acoustic absorption function.

Among the embodiments described in the US patent mentioned above, a nacelle is described, which is manufactured according to the preamble of the appended independent claim, namely has a casing or cowling having a substantially tubular shape and comprising:
- an outer barrel and an inner barrel, and
- a coupling edge or lip, which is frontally arranged and radially connects said walls;
said system comprising a panel structure having:
- electrically conductor means, adapted to generate heat when they are flown through by an electric current, and
- a sound attenuating layer.

In the above-mentioned US patent, the panel system is arranged frontally on the nacelle, shaping it above the lip of the cowling. In this way, the above-mentioned device is able to perform an acoustic attenuation of incident sound waves, besides replacing the function of the pneumatic anti-icing devices of the traditional type.

FR 2935356 A1 discloses a method for manufacturing an acoustic panel of an air intake lip of a nacelle comprising the steps of obtaining a deicing assembly perforated comprising at least one array of conductive elements obtained by a photolithography process, said deicing element being attached to a cellular core structure. The document also relates to an air intake lip and a nacelle.

EP 1845018 A2 and US 2008/179448 A1 disclose an engine nacelle inlet lip including both acoustic treatment and electric heating for ice protection. The inlet lip has a composite outer skin and a composite inner skin, with the composite outer skin having at least one integrated heater element embedded in the composite material. An acoustic cellular core positioned between the outer and inner skin acts to attenuate fan noise from the engine. Covering the outer skin and overlying the acoustic core is a perforated erosion shield having a first set of openings that pass entirely thorough its thickness. The composite outer skin includes a second set of openings such that sound waves can pass from an inner barrel portion of the inlet lip through the erosion shield, outer skin, and heater element to the underlying acoustic cellular core.

EP 0376371 A2 discloses thermal anti-icing systems for aircraft and methods for fabricating such systems. The anti-icing systems have an integrated one-piece skin with passageways formed therein to supply a heated fluid to that portion of an aircraft structure where anti-icing is desired. The anti-icing system also has an integrated or separately supplied manifold for routing heating fluid to the anti-icing system flow passages. The anti-icing system can be used in the leading edges of such aircraft structures as wings, horizontal and vertical stabilizers, inboard and outboard slats, engine struts, and engine cowls. A method for fabricating of aircraft structures with integral anti-icing systems of the character just described is also disclosed.

### Summary of the invention

The object of the present invention is to provide an improved nacelle.

According to the present invention, this and other objects are reached by means of a nacelle according to appended claim 1, which is independent.

The appended claims are an integral part of the technical teaches provided in the present description concerning the invention. In particular, the appended claims define some preferred embodiments of the present invention and describe optional technical features.

### Brief description of the drawings

Further features and advantages of the present invention will be best understood upon perusal of the following detailed description, which is provided by way of example and is not limiting, with reference to the accompanying drawings, which specifically show what follows:
- figure 1 is a longitudinal section of an explanatory example of a nacelle, not covered by the appended claims;
- figure 2 is a prospective and partially exploded view of a built-in system for anti-icing protection and acoustic absorption of the nacelle shown in figure 1; and
- figure 3 is a prospective and partial view of a further explanatory embodiment of a nacelle according to the present invention.

### Detailed description of the invention

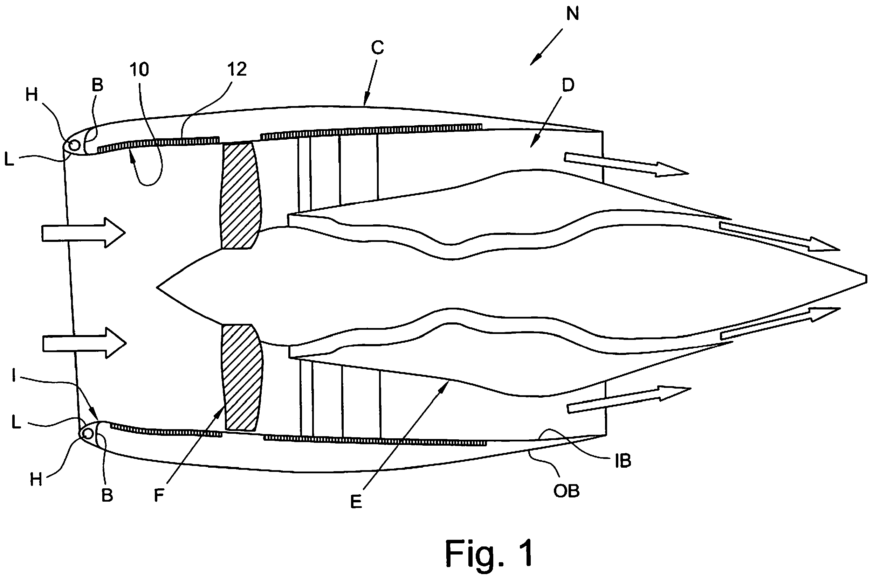

With reference in particular to figure 1, number 10 indicates, as a whole, an explanatory embodiment of a built-in system for anti-icing protection and acoustic absorption.

As shown in figure 1, in this embodiment, built-in system 10 is suited to be mounted on a nacelle N.

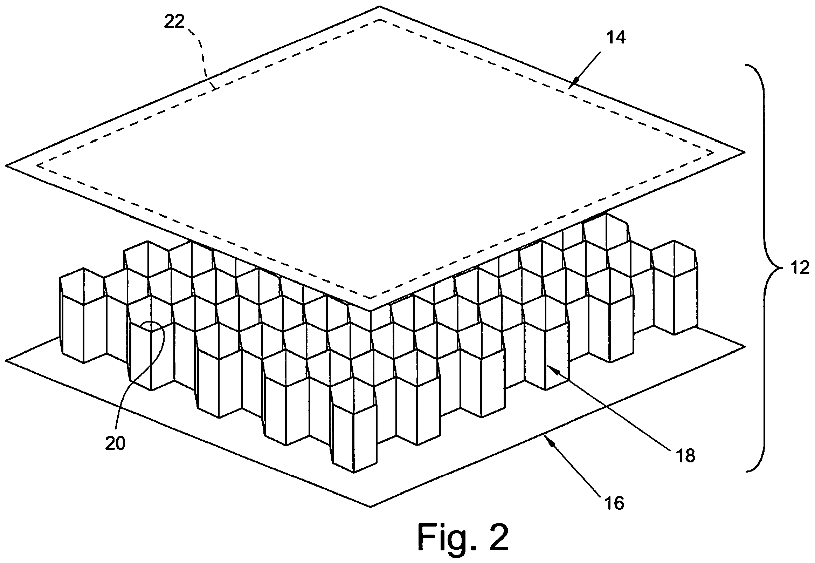

With reference in particular to the embodiment shown in figure 2, the above-mentioned built-in system 10 comprises a panel structure 12 having:
- electrically conductor means 22, adapted to generate heat when they are flown through by an electric current, and
- a sound attenuating layer, for example a cell-like layer 18 defining a reticular structure, which has a plurality of hollow cells 20, adapted to cause the sound waves affecting system 10 to resonate inside their barrels. Built-in system 10 comprises:
   - a face-sheet 14, which is operatively arranged in nacelle N in a radially inner position and, at least in an area of its, is sound permeable (in particular, it can be flown through by a prevailing portion of the sound waves hitting it)
   - a back-sheet 16, which is operatively arranged in the nacelle N in a radially outer position and is bearing as well as substantially sound reflecting (in particular, it can reflect a prevailing portion of the sound waves hitting it) .

Hence, back-sheet 16 is adapted to perform a structural support function, so as to allow panel structure 12 to generally keep the desired shape or profile, when it is installed on nacelle N. Back-sheet 16 is made of a composite material, such as a material having a matrix made of epoxy resin with a reinforce including glass fiber. If necessary, back-sheet 16 can also comprise sheets of portions made of insulating material, so as to prevent the electric current flowing through means 22 from propagating, in any way, through undesired regions of cowling C of nacelle N.

In the embodiment shown, sound attenuating layer 18 is interposed, in a sandwich-like manner, between face-sheet 14 and back-sheet 16. The sound attenuating layer comprises a cell-like layer 18. The latter is able to cause the sound waves entering through face-sheet 14 and reflected by back-sheet 16 to resonate, thus providing a sound attenuation.

In this technical field, face-sheet 14 and back-sheet 16 can also be considered as an exposed layer and a non-exposed layer, respectively.

Electrically conductor means 22 are able to operate, in use, as an anti-icing device, so as to heat up nacelle N, thus countering the drawbacks arising from the the formation of ice therein.

As explained more in detail below, the use of the above-mentioned built-in system 10 in a nacelle N permits a convenient design flexibility. As a matter of fact, when a nacelle N is designed, in order for inner barrel IB of cowling C to support built-in system 10, one can cause the nacelle N:
- not to have a dedicated anti-icing device of the pneumatic type, which is typically installed in correspondence to lip L, so as to at least partially avoid the drawbacks concerning sizes, weight and performance degradation; or
- to have, in addition to electrically conductor means 22, a dedicated anti-icing device of the pneumatic type (e.g. of the type discussed above in the description of the technical background), so as to increase the heating action generally exerted in nacelle N.

If lip L is provided with the anti-icing device of the pneumatic type, panel structure 12 of system 10 preferably extends so as to make up lip L itself, in order to provide the latter with a local heating thanks to electrically conductor means 22.

Means 22 are built-in in face-sheet 14.

Electrically conductor means 22 comprise an electrically conductor material, which is suited to be flown through by an electric current, so as to deliver a heat power, in particular in a radial manner towards the inside of nacelle N.

Face-sheet 14 comprises a sheet made of a composite material that is acoustically porous, which means that it is permeable to incident sound waves or can be flown through by them. Said composite material sheet comprises a matrix in which a reinforce is embedded, which comprises the above-mentioned electrically conductor material making up the heating device.

Preferably, the above-mentioned matrix is made of an electrically insulating material.

By way of example, the electrically conductor material making up the above-mentioned reinforcement comprises oblong bodies or fibers made of an electrically conductor material, such as for example carbon fibers, which can be flown through by a suitable electric current, which is supplied by an external electric generator, which is controlled according to predetermined criteria.

Optionally, the above-mentioned reinforce comprises a plurality of oblong bodies or fibers made of the above-mentioned electrically conductor material, which can be arranged according to a predetermined pattern (for example, arranged in meshes or defining rings that are substantially centered around the axis of cowling C of nacelle N) or oriented according to a substantially casual arrangement.

By way of example, built-in structure 10 can be designed so as to create a heating system divided into areas of inner barrel IB of cowling C, so as to obtain a temperature that is overall substantially homogeneous and to optimize the heating electric power delivered. For example, the density of the oblong bodies or fibers provided in face-sheet 14 can axially decrease from the area of lip L towards the area of the engine assembly (in particular of fan F), so as to generate, given the same voltage delivered by the electric generator, a greater heat close to the front section of the cowling and a smaller heat close to the engine assembly. Alternatively, in order to obtain a similar effect, one can substantially provide, along face-sheet 14, the same density of oblong bodies or fibers, but design electric connections to the electric generator that are adapted to supply a greater voltage close to lip L, which is basically colder, and a smaller voltage close to the engine assembly, which is basically hotter.

In a further preferred embodiment of the present invention, face-sheet 14 is also at least partially covered by a coating 24 made of a corrosion-resistant material. Preferably, above-mentioned coating 24 can have a plurality of perforations, for example micro-holes, adapted to cause it to be acoustically porous, just like face-sheet 14 underneath. Alternatively, the metal material sheet comprises - and is preferably made of - a fine mesh net.

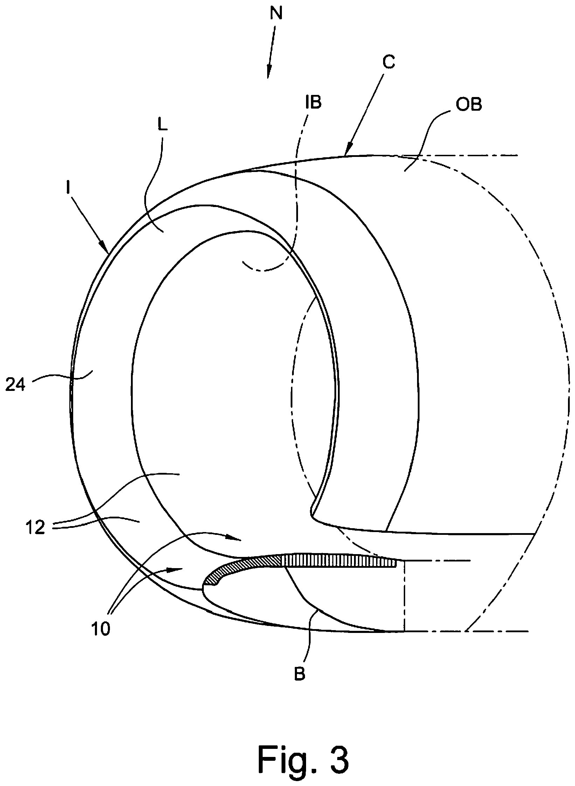

For example, the above-mentioned corrosion-resistant coating 24 can be made of at least one of the materials selected from the group consisting of: properly treated aluminum alloy and titanium alloy, and stainless steel. As described more in detail below, this feature is particularly - but not exclusively - advantageous when panel structure 12 is used in a nacelle N to replace the pneumatic heating devices of the traditional type that are built-in in lip L of inlet I of cowling C, for example in the solution according to the configuration shown in figure 3. In particular, the above-mentioned coating 24 helps avoid corrosion phenomena that can occur on face-sheet 14 of panel structure 12, since face-sheet 14 covers lip L of inlet I defined by cowling C.

Coating 24 can extend on entire face-sheet 14 of panel structure 12, thus defining its entire surface that is operatively arranged in a radially inner position of cowling C. Alternatively, coating 24 can extend only on the part of face-sheet 14 that is arranged in correspondence to lip L, thus making it up or covering it.

As far as the production of built-in system 10 is concerned, panel structure 12 (including electrically conductor means 22) is manufactured as one single piece, without the use of joints, for example by using a procedure that is similar to the one described in patent no. EP 2 017 077 A2, which is owned by the Applicant.

Panel structure 12 is manufactured by means of a production process comprising a step for the lamination of face-sheet 12 (including electrically conductor means 22, which, for example, are preliminarily built-in or embedded in the face-sheet), a step to apply cell-like layer 18 onto face-sheet 14, a step for the lamination of back-sheet 16, a co-curing step for the polymerization of the assembly consisting of layers 14, 16, 18 arranged one on top of the other, and, if necessary, a step for the perforation of the face-sheet 14 - which, in turn, can be at least partially covered by coating 24 - so as to cause it to be sound permeable or crossable.

In figure 1, built-in system 10 is mounted on nacelle N.

In this embodiment, nacelle N comprises a casing or cowling C with an aerodynamic shape. In particular, cowling C has a substantially tubular shape, for example a barrel-like or a cask-like shape. Preferably, the cowling has a longitudinal section defining an aerodynamic profile with a wing-like shape.

More in detail cowling C has an air inlet I, from which a through cavity develops, which extends in a substantially axial direction.

The structure of cowling C comprises an outer barrel OB and an inner barrel IB. Outer barrel OB and inner barrel IB define respective substantially cylindrical shapes, which are radially spaced apart and enclose, between them, a hollow space or annular space.

Cowling C houses, through the through cavity and downstream of inlet I, an engine assembly of the jet type, which is adapted to receive air from the air inlet and to accelerate it, so as to generate a thrust. In particular, the engine assembly is designed as a structure of the so-called turbo-fan type, which means that it comprises:
- a fan F, which is suited to accelerate the air flow flowing in through inlet I, and
- an engine E, which is arranged downstream of fan F.

In the embodiment shown, an annular region or by-pass duct D is defined between cowling C and engine E, said by-pass duct D being structured so as to convey the air fraction flowing through fan F that is not destined to flow through engine E.

Clearly, the structure and the operation of the above-mentioned engine assembly, which is schematically shown in figure 1, are known to person skilled in the art and, for the sake of brevity, they will not be described in detail in the present description. In the above-mentioned figure, the air flows flowing through nacelle N are shown, by mere way of example, with a series of arrows.

As already mentioned above, inlet I is provided with a lip L, which is defined by the connection between the above-mentioned outer barrel OB and the above-mentioned inner barrel IB. In particular, lip L has an axial section that defines a C-shape, whose cavity faces backwards.

When system 10 is applied to nacelle N, inner barrel IB is the one that supports the above-mentioned system 10.

Panel structure 12 makes up the entire inner barrel IB. Clearly, when used in association with nacelle N, panel structure 12 has face-sheet 14 facing inwards, which means that it faces the inner cavity defined by inner barrel IB of cowling C.

In the configuration shown by way of example in figure 1, the above-mentioned panel structure 12 ends before lip L of inlet I, because lip L houses a pneumatic heating device H in the hollow space or annular channel (making up a so-called D-duct) defined between barrels IB, OB of cowling C (in particular, also delimited on the rear side by a bulkhead B). The configuration shown in figure 1 is therefore not covered by the appended claims.

In this way, nacelle N that is shown by way of example in figure 1 is provided with a "hybrid" heating system, in which a pneumatic heating device H of the traditional type (in particular, of the so-called "Piccolo tube" type) and electrically conductor means 22 supported by element 10 coexist. This configuration is particularly useful to obtain a heating system with performances that are higher than the ones known to a person skilled in the art, especially when more biding rules will be enforced in the aeronautical field (for example, in conditions known as "Supercooled Large Droplet Icing Conditions").

In the embodiment shown in figure 1, the barrel portion made up of panel structure 12 ends before the area of nacelle N where fan F is housed. In further examples though, this barrel portion can extend up to the above-mentioned area, so as to surround fan F.

With reference in particular to figure 3, a nacelle N is shown, which is an alternative to the one shown in figure 1. In this nacelle N, especially in its inner barrel IB, element 10 - with its panel structure 12 - extends so as to make up lip L itself. In this way, element 10 can operate as a running-wet system, in which the water particles deriving from the melting of the ice formed inside cowling C are kept at a liquid state substantially for the entire extension of air intake I up to fan F and are subsequently expelled by fan F itself.

Optionally, the portion of the face-sheet 14 that helps define lip L is made of or covered with a corrosion-resistant material, for example at least one of the materials selected from the group consisting of: properly treated aluminum alloy and titanium alloy, and stainless steel.

According to the present invention, panel structure 12 makes up the entire inner barrel IB of cowling C and lip L, thus crating the whole assembly as one single piece. These features allow the overall nacelle manufacturing process to the simplified as well as the area ensuring an acoustic attenuation to be extended.

According to some analyses carried out by the Applicant, several performance advantages due to element 10 according to the present invention have been observed.

For example, when replacing a pneumatic anti-icing device of the traditional type with an electric heating device incorporated in built-in system 10 according to the present invention, weight can be reduced by 90%, whereas, for entire lip L of the inlet I, this weight reduction can reach 20%.

Furthermore, when replacing the pneumatic anti-icing device of the traditional type (which operates so as to cause the substantially complete evaporation of the water particles affecting lip L) with the electric heating device incorporated in built-in system 10 according to the present invention (which, on the other hand, operates as a running-wet system to keep the water particles at a temperature that is compatible with their liquid state), the power reduction, which is necessary to avoid the presence of ice, can reach up to 23% for a medium-sized nacelle N.

In particular, in this way, the structure of lip L can benefit from the advantages associated with the technology known as "zero-splice liner", which so far has been used only in the panel structure of the elements for acoustic absorption known in the technical field.

According to the invention, system 10 - in particular with its panel structure 12 - internally makes up the above-mentioned inner barrel IB together with lip L, thus creating them both as one single piece. Therefore, inner barrel IB with lip L is manufactured in a structurally continuous manner, with substantial advantages especially in terms of the structure of the entire nacelle. Naturally, the principle of the present invention being set forth, the embodiments and the implementation details can be widely changed with respect to what described above and shown in the drawings as a mere way of non-limiting example, without in this way going beyond the scope of protection provided by the accompanying claims.

## Claims

1. Nacelle (N) for an aircraft, provided with a built-in system (10) for anti-icing protection and acoustic absorption;
said nacelle comprising a casing or cowling (C), which has a substantially tubular shape and comprises:
- an outer barrel (OB) and an inner barrel (IB), and
- a coupling edge or lip (L), which is frontally arranged and radially connects said barrels (OB, IB);
said system (10) comprising a panel structure (12) having:
- a face-sheet (14), which is arranged in a radially inner position and, at least in an area of its, is sound permeable;
- a back-sheet (16), which is arranged in a radially outer position and is bearing as well as substantially sound reflecting;
- a sound attenuating layer (18) interposed, in a sandwich-like manner, between said face-sheet (14) and said back-sheet (16) and being able to attenuate the sound waves entering through said face-sheet (14) and reflected by said back-sheet (16);
- electrically conductor means (22) built into said face-sheet (14), for generating heat when they are flown through by an electric current;
said panel structure (12) being manufactured by means of a production process comprising:
- a step for the lamination of said face-sheet (14) including said electrically conductor means (22);
- a step to apply said sound attenuating layer (18), being a cell-like layer, onto said face-sheet (14);
- a step for the lamination of said back-sheet (16),
- a co-curing step for the polymerization of the assembly consisting of the face sheet (14), the sound-attenuating layer (18) and the back-sheet (16) arranged one on top of the other;
wherein said inner barrel (IB) presents said system (10) ;
**characterized in that** said panel structure (12) is manufactured as one single piece, without the use of joints, and **in that** said panel structure (12) internally makes-up the entire inner barrel (IB) of the cowling (C) together with said lip (L), thus creating a single piece.

2. Nacelle according to claim 1, wherein said sound attenuating layer comprises a cell-like layer (18) defining a reticular structure, which has a plurality of hollow cells (20), for causing the sound waves affecting said system (10) to resonate inside their barrels (OB, IB).

3. Nacelle according to claim 1, wherein said face-sheet (14) is a sheet made of an acoustically porous composite material and comprising a matrix, preferably made of an electrically insulating material, in which a reinforce is embedded, which includes said electrically conductor material (22).

4. Nacelle according to any of the previous claims, wherein said face-sheet (14) is at least partially covered by a coating (24) made of a corrosion-resistant material.

## Patentansprüche

1. Gondel (N) für ein Flugzeug, aufweisend ein eingebautes System (10) zum Schutz gegen Vereisung und zur Schallabsorption;
wobei die Gondel ein Gehäuse oder eine Verkleidung (C) umfasst, welches oder welche im wesentlichen rohrförmig ist, und welches oder welche aufweist:
- einen äußeren Zylinder (OB) und einen inneren Zylinder (IB), und
- eine Kupplungskante oder Lippe (L), welche stirnseitig angeordnet ist und welche die Zylinder (OB, IB) radial miteinander verbindet;
wobei das System (10) eine Plattenstruktur (12) aufweist, umfassend:
- eine Deckschicht (14), welche in einer radial inneren Position angeordnet ist und zumindest in einem Bereich schalldurchlässig ist;
- eine Rückschicht (16), welche in einer radial äußeren Position angeordnet ist und sowohl tragend als auch im wesentlichen schallreflektierend ist;
- eine schalldämpfende Schicht (18), die sandwichartig zwischen der Deckschicht (14) und der Rückschicht (16) angeordnet ist und welche in der Lage ist, die durch die Deckschicht (14) eintretenden und von der Rückschicht (16) reflektierten Schallwellen zu dämpfen;
- elektrisch leitende Mittel (22), welche in die Deckschicht (14) eingebaut sind, um Wärme zu erzeugen, wenn sie von einem elektrischen Strom durchflossen werden;
wobei die Plattenstruktur (12) mittels eines Produktionsverfahrens hergestellt wird umfassend die Schritte:
- einen Schritt zur Laminierung der Deckschicht (14), welches elektrisch leitende Mittel (22) umfasst;
- einen Schritt zum Aufbringen der schalldämpfenden Schicht (18), bei welche es sich um eine zellenartige Schicht handelt, auf die Deckschicht (14);
- einen Schritt zum Laminieren der Rückschicht (16);
- einen Co-Härtungsschritt für die Polymerisation des Aufbaus, welches die Deckschicht (14), die schalldämpfende Schicht (18) und die Rückschicht (16) aufweist, welche übereinander angeordnet sind;
wobei das innere Zylinder (IB) das System (10) darstellt,
**dadurch gekennzeichnet, dass** die Plattenstruktur (12) in einem einzigen Stück ohne Verwendung von Gelenken hergestellt ist, und
**dadurch gekennzeichnet, dass** die Plattenstruktur (12) im Inneren den gesamten Innenzylinder (IB) der Verkleidung (C) mit der Lippe (L) zusammen verbindet, so dass ein einziges Stück entsteht.

2. Gondel nach Anspruch 1, wobei die schalldämpfende Schicht eine zellenartige Schicht (18) umfasst, welche eine netzartige Struktur definiert, welche eine Vielzahl von hohlen Zellen (20) aufweist, um die Schallwellen, welche auf das System (10) einwirken, innerhalb ihrer Zylinder (OB, IB) in Resonanz zu bringen.

3. Gondel nach Anspruch 1, wobei die Deckschicht (14) eine Platte aus einem akustisch porösen Verbundmaterial ist und eine Matrix aufweist, vorzugsweise aus einem elektrisch isolierenden Material, in welche eine Verstärkung eingebettet ist,
wobei die Verstärkung das elektrisch leitende Material (22) aufweist.

4. Gondel nach einem der vorhergehenden Ansprüche, wobei die Deckschicht (14) zumindest teilweise mit einer Beschichtung (24) aus einem korrosionsbeständigen Material überzogen ist.

## Revendications

1. Nacelle (N) pour aéronef, munie d'un système intégré (10) de protection antigivre et d'absorption acoustique ;
ladite nacelle comprenant un carter ou carénage (C), qui présente une forme sensiblement tubulaire et comprend :
- un corps cylindrique extérieur (OB) et un corps cylindrique intérieur (IB), et
- un bord ou rebord de couplage (L), qui est disposé en avant desdits corps cylindriques (OB, IB) et les relie radialement ;
ledit système (10) comprenant une structure de panneau (12) présentant :
- une feuille avant (14), qui est agencée dans une position radialement intérieure et, au moins dans une zone de celle-ci, est perméable aux sons ;
- une feuille arrière (16), qui est agencée dans une position radialement extérieure, est porteuse et réfléchit sensiblement les sons ;
- une couche d'atténuation sonore (18) interposée, de manière enserrée, entre ladite feuille avant (14) et ladite feuille arrière (16) et capable d'atténuer les ondes sonores entrant à travers ladite feuille avant (14) et réfléchies par ladite feuille arrière (16) ;
- des moyens électriquement conducteurs (22) intégrés dans ladite feuille avant (14), pour générer de la chaleur lorsqu'ils sont traversés par un courant électrique ;
ladite structure de panneau (12) étant fabriquée au moyen d'un procédé de production comprenant :
- une étape pour la stratification de ladite feuille avant (14) comprenant lesdits moyens électriquement conducteurs (22) ;
- une étape consistant à appliquer ladite couche d'atténuation sonore (18), qui est une couche de type cellule, sur ladite feuille avant (14) ;
- une étape de stratification de ladite feuille arrière (16),
- une étape de co-durcissement pour la polymérisation de l'ensemble constitué de la feuille avant (14), de la couche d'atténuation sonore (18) et de la feuille arrière (16) agencées les unes au-dessus des autres ;
dans laquelle ledit corps cylindrique intérieur (IB) présente ledit système (10) ;
**caractérisée en ce que** ladite structure de panneau (12) est fabriquée en une seule pièce, sans l'utilisation de joints, et **en ce que**
ladite structure de panneau (12) constitue intérieurement la totalité du corps cylindrique intérieur (IB) du carénage (C) conjointement avec redit rebord (L), en créant ainsi une pièce unique.

2. Nacelle selon la revendication 1, dans laquelle ladite couche d'atténuation sonore comprend une couche de type cellule (18) définissant une structure réticulaire, qui présente une pluralité de cellules creuses (20), pour amener les ondes sonores affectant ledit système (10) à résonner à l'intérieur de leurs corps cylindriques (OB, IB).

3. Nacelle selon la revendication 1, dans laquelle ladite feuille avant (14) est une feuille constituée d'un matériau composite acoustiquement poreux et comprenant une matrice, de préférence constituée d'un matériau électriquement isolant, dans laquelle un renfort est incorporé, qui comprend ledit matériau électriquement conducteur (22).

4. Nacelle selon l'une quelconque des revendications précédentes, dans laquelle ladite feuille avant (14) est au moins partiellement recouverte d'un revêtement (24) constitué d'un matériau résistant à la corrosion.
